(19) Europäisches Patentamt / European Patent Office / Office européen des brevets

(11) **EP 3 132 160 B1**

(12) **FASCICULE DE BREVET EUROPEEN**

(45) Date de publication et mention
de la délivrance du brevet:
**04.05.2022 Bulletin 2022/18**

(21) Numéro de dépôt: **15714562.4**

(22) Date de dépôt: **04.03.2015**

(51) Classification Internationale des Brevets (IPC):
**F16H 61/04** *(2006.01)*    **F16H 63/50** *(2006.01)*

(52) Classification Coopérative des Brevets (CPC):
**F16H 63/502; F16H 61/0403;** F16H 2061/0078;
F16H 2061/0474

(86) Numéro de dépôt international:
**PCT/FR2015/050521**

(87) Numéro de publication internationale:
**WO 2015/158971 (22.10.2015 Gazette 2015/42)**

(54) **PROCEDE DE PILOTAGE DE LA SYNCHRONISATION D'UN PIGNON SUR UN ARBRE DE BOITE DE VITESSES**

VERFAHREN ZUR STEUERUNG DER SYNCHRONISATION EINES ZAHNRADES AN EINER GETRIEBEWELLE

METHOD FOR CONTROLLING THE SYNCHRONISATION OF A PINION ON A GEARBOX SHAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.04.2014 FR 1453295**

(43) Date de publication de la demande:
**22.02.2017 Bulletin 2017/08**

(73) Titulaires:
• **Renault s.a.s**
**92100 Boulogne Billancourt (FR)**
• **Nissan Motor Co. Ltd**
**Yokohama-shi, Kanagawa 220-8623 (JP)**

(72) Inventeurs:
• **MALOUM, Abdelmalek**
**F-94550 Chevilly-larue (FR)**
• **NAIR, Karima**
**F-78000 Versailles (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
EP-A1- 2 354 599     DE-A1-102006 019 239
FR-A1- 2 954 441     FR-A1- 2 988 799
US-A1- 2006 080 018

**Description**

La présente invention se rapporte à la commande des passages de vitesses sur une boîte de vitesses de véhicule disposant d'au moins une source d'énergie, telle qu'un moteur thermique de traction et/ou une machine électrique de traction.

Plus précisément, elle a pour objet un procédé de pilotage de la synchronisation d'un pignon tournant sur un arbre primaire entraîné par une machine de traction du véhicule, et lié en rotation à un arbre secondaire de boîte de vitesses à arbres parallèles dépourvue de mécanismes de synchronisation. Ce procédé repose sur l'envoi à la machine de traction, avant l'accouplement du pignon sur l'arbre primaire, d'une commande de couple pour minimiser l'écart entre le régime primaire et le régime secondaire multiplié par le rapport de réduction entre ces deux arbres.

Cette invention s'applique sur toute transmission à arbres parallèles, dans laquelle des changements de rapport s'effectuent par déplacement d'un moyen de couplage sans anneaux de synchronisation, en particulier dans les groupes motopropulseurs électriques et hybrides.

Lorsque qu'un système de couplage par crabotage de baladeur sur les pignons est dépourvu de moyens de synchronisation mécaniques, la synchronisation des éléments tournants peut s'effectuer par un pilotage du régime primaire de boîte. Ce pilotage nécessite un contrôle précis du régime par la machine de traction, afin d'éviter les à-coups de couple.

Par la publication FR 2 988 799, on connaît un procédé de synchronisation d'un pignon avec son arbre, sans synchroniseur mécanique. Selon ce procédé, la machine de traction du véhicule, est pilotée pour minimiser l'écart entre le régime primaire et le régime secondaire de la boîte, multiplié par le rapport de démultiplication entre les deux arbres. L'intérêt de la méthode, est de maintenir le pilotage de la machine de traction jusqu'à l'égalisation totale des vitesses de l'arbre de la machine électrique et de l'arbre lié aux roues, au rapport de démultiplication près. Toutefois, sa précision se heurte à l'inertie de la machine de traction et à son temps de réponse aux consignes de pilotage en couple, notamment lorsque cette machine de traction est un moteur thermique. Les principales difficultés sont rencontrées lors de freinages appuyés, en forte déclivité.

Pour que le passage soit réalisé dans des conditions satisfaisantes, l'opération doit être complètement transparente pour le conducteur, en continuant à satisfaire sa demande de couple à la roue. Il faut en particulier que l'écart de régime arrive très rapidement dans une gamme de 30 rpm (tours par minute).

Par la publication FR 2 954 441, on connaît une méthode d'accouplement d'un réducteur de machine électrique sur un train roulant de véhicule, où la synchronisation d'un crabot amont lié au réducteur avec un crabot aval lié au train roulant est réalisée en pilotant la machine électrique de manière à minimiser l'écart de régime des deux crabots.

La présente invention a pour but d'assurer la synchronisation de deux arbres de boîte de vitesses en un temps minimum, avant d'entamer la phase d'accouplement des arbres.

Dans ce but, elle propose de limiter en amplitude un signal de couple calculé, lorsque l'écart de régime l'écart entre le régime primaire et le régime secondaire multiplié par le rapport de réduction entre ces deux arbres est supérieur en valeur absolue à la précision souhaitée sur le régime primaire ciblé en fin de phase de synchronisation.

La méthode permet d'effectuer les changements de rapport en douceur en toute circonstance, notamment lors de freinages appuyés sur des rampes de descente à forte déclivité. Elle élimine les principales sources d'à-coups de couple susceptibles d'être engendrés lors de la phase de l'accouplement. On évite ainsi l'usure excessive des pièces mécaniques du système d'accouplement.

D'autres caractéristiques et avantages de l'invention ressortiront clairement de la description suivante d'un mode de réalisation non limitatif de celle-ci, en se reportant aux dessins annexés, sur lesquels :

-	la figure 1 est une représentation schématique de l'accouplement, et
-	la figure 2 résume sous forme logique, le procédé de l'invention.

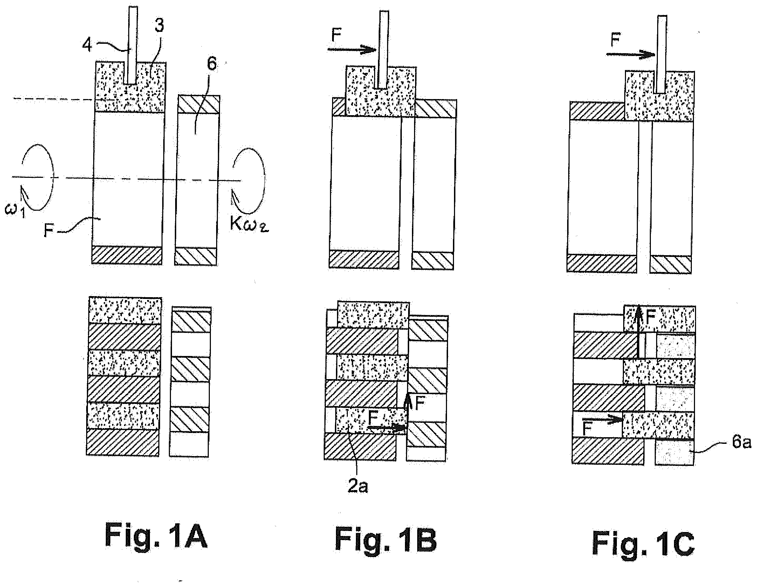

Sur les figures 1A à 1C, on a représenté de façon schématique un baladeur de passage de vitesses 2 et son manchon 3, sa fourchette de commande 4 et un pignon de vitesse 6. Dans la partie inférieure des schémas, on a également fait apparaître les dents 2a et 6a du baladeur et du pignon. Le baladeur 2 et le pignon 6 sont coaxiaux sur un arbre « primaire » de boîte (non représenté) lié à une source d'énergie (machine de traction) du véhicule. Le pignon 6 est lié en rotation à un arbre secondaire de boîte relié aux roues du véhicule.

La figure 1A représente l'état initial du système, au point mort. Le baladeur 2 tourne à la vitesse $\omega_1$, qui est celle de l'arbre primaire. Le pignon 6 tourne à une vitesse $k\omega_2$, différente de $\omega_1$, qui est imposée par un arbre secondaire de la boîte. Sur la figure 1B, le baladeur 2 s'est déplacé jusqu'à ce que ses dents 2a rencontrent celles du pignon 6. Lorsque leurs vitesses de rotation sont égalisées, c'est-à-dire à l'issue de la phase de synchronisation, les dents du baladeur pénètrent entre celles du pignon pour engager la vitesse : c'est la phase d'accouplement du pignon et du baladeur.

La stratégie de contrôle proposée a pour but de rendre la phase d'accouplement du baladeur et du pignon aussi transparente que possible, c'est-à-dire pratiquement sans à-coup de couple. La synchronisation est pilotée pour cela de manière à transmettre le minimum de couple au coupleur, lors de la phase d'accouplement.

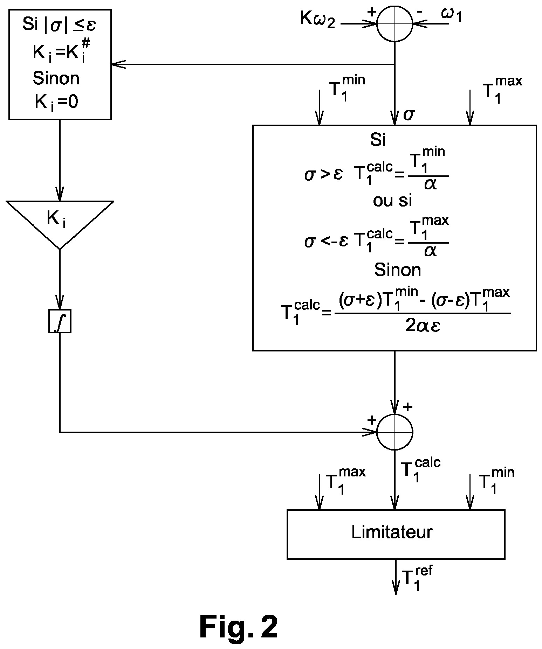

Dans la description suivante de la stratégie illustrée par la figure 2, on adopte les notations suivantes:

$\omega_1$ : Régime de l'arbre primaire et du baladeur 2 liés à la source d'énergie;

$T_1$ : Couple de la source d'énergie ;

$T_{d1}$ : Couple résistant de la source d'énergie (entrée exogène inconnue) ;

$J_1$ : Inertie ramenée à l'arbre du baladeur 2;

$K\omega_2$ : Régime du pignon 6 qui sert de cible à atteindre ;

$T_{d2}$ : Couple résistant du pignon 6 (entrée exogène inconnue) ;

$J_2$ : Inertie ramenée au pignon 6 ;

$K$: Rapport de réduction entre les arbres secondaire et primaire ;

En supposant qu'à l'état initial, les deux arbres de la boîte sont complètement désaccouplés, et en appliquant le principe fondamental de la mécanique, on obtient le modèle dynamique suivant :

- pour l'arbre secondaire : $J_2\dot{\omega}_2 = T_{d2}$, couple résistant du secondaire, et
- pour l'arbre primaire : $J_1\dot{\omega}_1 = T_1 + T_{d1}$, somme du couple moteur et du couple résistant du primaire.

Conformément à la figure 2, la synchronisation des arbres primaire et secondaire (au rapport de démultiplication K près) est réalisée en produisant un signal de commande de référence $T_1^{ref}$ de la façon suivante. On multiplie le signal de référence mesuré $\omega_2^{mes}$ (régime secondaire) par le rapport de réduction $K$, pour comparer le produit $K.\omega_2^{mes}$ au signal de référence $\omega_1^{mes}$ (régime primaire). Le signe et l'amplitude de l'écart $\sigma = K.\omega_2^{mes} - \omega_1^{mes}$ permettent de calculer une valeur du couple $T_1^{calc}$ à appliquer à l'entrée de la source d'énergie, machine de traction thermique ou électrique. La commande de couple $T_1^{ref}$ dépend du signal de couple $T_1^{calc}$ calculé pour minimiser l'écart $\sigma$ entre le régime primaire $\omega_1$ et le régime secondaire $\omega_2$ multiplié par le rapport de réduction K entre ces deux arbres. Le couple calculé $T_1^{calc}$ est surveillé pour déterminer s'il est compris entre les couples minimum et maximum $T_1^{min}$ et $T_1^{max}$ de la machine de traction. Si ce n'est pas le cas, le signal $T_1^{calc}$ est saturé sur l'une de ces valeurs.

L'écart de régime $\sigma$ est comparé à un paramètre calibré $\varepsilon$, représentant la précision que l'on souhaite atteindre sur la cible de régime primaire. $\varepsilon$ est l'écart de régime toléré entre la cible et la valeur de régime primaire obtenue à l'issue de la phase de synchronisation. Lorsque $\sigma > \varepsilon$ ou $\sigma < -\varepsilon$ (écart $\sigma$ est supérieur en valeur absolue à la précision $\varepsilon$ souhaitée, sur le régime primaire $\omega_1$ ciblé en fin de phase de synchronisation), le couple calculé $T_1^{calc}$ est limité en amplitude par un coefficient calibré $\alpha$, supérieur ou égal à 1. Plus précisément et conformément à l'invention, l'amplitude du signal de couple calculé $T_1^{calc}$ est alors limitée sur des valeurs égales au rapport des couples maximum $T_1^{max}$ et minimum $T_1^{min}$ de la machine de traction sur un coefficient de limitation calibré $\alpha$. Les valeurs $T_1^{min}/\alpha$ ou $T_1^{max}/\alpha$ déterminent le couple de traction utilisable pour la synchronisation.

Lorsque l'écart $\sigma$ est inférieur en valeur absolue à la précision $\varepsilon$, le couple calculé $T_1^{calc}$ est lissé, en lui appliquant par exemple une formule du type :

$$T_1^{calc} = \frac{(\sigma + \varepsilon)T_1^{min} - (\sigma - \varepsilon)T_1^{max}}{2\alpha\varepsilon}$$

Une autre originalité de l'invention consiste à activer une opération d'intégration de l'écart $\sigma$ multiplié par un gain calibré $K_i$, lorsque cet écart est inférieur en valeur absolue à la précision $\varepsilon$ souhaitée $\varepsilon$. Le gain $K_i$ a une valeur $K_i^{\#}$ non nulle. Dans le cas contraire $K_i$ est nul, et le terme de correction intégré l'est également. Le couple calculé $T_1^{calc}$ est corrigé par ce terme d'intégration. Comme indiqué sur la figure, le terme d'intégration est ajouté au signal $T_1^{calc}$ issu des étapes de limitation d'amplitude ou de lissage précédentes.

Le signal de commande de couple $T_1^{ref}$ de la machine de traction est obtenu en limitant le signal calculé $T_1^{calc}$ dans un « limiteur », entre les valeurs de couple maximum $T_1^{max}$ et de couple minimum $T_1^{min}$ de la machine de traction. Cette limitation est opérée après la correction éventuelle du signal calculé $T_1^{calc}$, par le terme intégré.

Enfin, le signal $T_1^{calc}$ corrigé est borné entre les valeurs de couple maximum et minimum $T_1^{min}$ et $T_1^{max}$ dans le « limitateur » mentionné sur la figure 2, qui délivre le signal de commande de référence $T_1^{ref}$ de la machine de traction, pour effectuer la synchronisation du baladeur 2 et du pignon 6.

Lorsque les éléments tournants sont synchronisés, la deuxième phase, ou phase d'accouplement, consistant à déplacer le baladeur de sa position « ouverte » à sa position « fermée », peut intervenir.

En conclusion, la stratégie mise en œuvre par l'invention permet de réduire l'écart de régime très rapidement pour arriver à une valeur d'environ 30 tours par minute. Le procédé rend la phase suivante d'accouplement des deux arbres satisfaisante pour l'utilisateur, en dépit de la reprise de couple, c'est-à-dire avec le moins d'à-coup de couple possible. Il permet notamment de gérer des suivis de trajectoire de type rampe, correspondants aux cas défavorables de freinage appuyé mentionnés plus haut. Enfin, la convergence vers le régime cible ne dépend aucunement des paramètres intrinsèques du système (comme l'inertie et le temps de réponse des actionneurs et/ou de la machine de traction, ou d'éventuels retard), ce qui fait de cette stratégie, une stratégie robuste. Elle est valable quel que soit le type de source d'énergie sollicité pour la synchronisation, que ce soit une machine électrique ou un moteur thermique, que celui-ci tourne ou non sur un régime de ralenti, en transmettant du couple aux roues ou pas.

## Revendications

1. Procédé de pilotage de la synchronisation d'un pignon (6) tournant sur un arbre primaire de boîte de vitesses à arbres parallèles dépourvue de mécanismes de synchronisation entraîné par une machine de traction du véhicule et lié en rotation à un arbre secondaire de la boîte, par envoi à la machine de traction, avant l'accouplement du pignon (6) sur l'arbre primaire, d'une commande de couple $(T_1^{ref})$ qui dépend d'un signal de couple $(T_1^{calc})$ calculé pour minimiser l'écart $(\sigma)$ entre le régime primaire $(\omega_1)$ et le régime secondaire $(\omega_2)$ multiplié par le rapport de réduction $(K)$ entre les deux arbres de la boîte, **caractérisé en ce que** l'amplitude du signal de couple calculé $(T_1^{calc})$ est limitée sur des valeurs égales au rapport des couples maximum $(T_1^{max})$ et minimum $(T_1^{min})$ de la machine de traction sur un coefficient de limitation calibré $(\alpha)$, lorsque l'écart $(\sigma)$ est supérieur en valeur absolue à la précision $(\varepsilon)$ souhaitée sur le régime primaire $(\omega_1)$ ciblé en fin de phase de synchronisation.

2. Procédé de pilotage selon la revendication 1, **caractérisé en ce que** le couple calculé $(T_1^{calc})$ est lissé, lorsque l'écart $(\sigma)$ est inférieur en valeur absolue à la précision $(\varepsilon)$ souhaitée sur le régime primaire $(\omega_1)$ ciblé en fin de phase de synchronisation.

3. Procédé de pilotage selon la revendication 1 ou 2, **caractérisé en ce que** le couple calculé $(T_1^{calc})$ est corrigé par une intégration de l'écart $(\sigma)$ avec un gain calibré $(K_i)$ non nul, lorsqu'il est inférieur en valeur absolue à la précision souhaitée $(\varepsilon)$.

4. Procédé de pilotage selon la revendication 2 ou 3, **caractérisé en ce que** la commande de couple $(T_1^{ref})$ de la machine de traction est obtenu en limitant le signal de couple calculé $(T_1^{calc})$ entre les valeurs de couple maximum $(T_1^{max})$ et de couple minimum $(T_1^{min})$ de la machine de traction.

5. Procédé de pilotage selon les revendications 3 et 4, **caractérisé en ce que** cette limitation est opérée après la correction du signal calculé $(T_1^{calc})$, par le terme intégré.

## Patentansprüche

1. Verfahren zur Steuerung der Synchronisation eines Ritzels (6), das auf einer Primärwelle eines nicht mit Synchronisationsmechanismen versehenen Parallelwellengetriebes rotiert, die von einer Antriebsmaschine des Fahrzeugs angetrieben wird und mit einer Sekundärwelle des Getriebes drehverbunden ist, durch Senden an die Antriebsmaschine, vor dem Koppeln des Ritzels (6) mit der Primärwelle, eines Drehmomentbefehls $(T_1^{ref})$, welcher von einem Drehmomentsignal $(T_1^{calc})$ abhängt, das berechnet wird, um die Abweichung $(\sigma)$ zwischen der Primärdrehzahl $(\omega_1)$ und der mit dem Untersetzungsverhältnis $(K)$ zwischen den zwei Wellen des Getriebes multiplizierten Sekundärdrehzahl $(\omega_2)$ zu minimieren, **dadurch gekennzeichnet, dass** die Amplitude des berechneten Drehmomentsignals $(T_1^{calc})$ auf Werte begrenzt wird, die gleich dem Verhältnis des maximalen $(T_1^{max})$ und des minimalen $(T1^{min})$ Drehmoments der Antriebsmaschine zu einem kalibrierten Begrenzungskoeffizienten $(\alpha)$ sind, wenn die Abweichung $(\sigma)$ dem absoluten Betrag nach größer als die gewünschte Genauigkeit $(\varepsilon)$ für die am Ende der Synchronisationsphase angestrebte Primärdrehzahl $(\omega_1)$ ist.

2. Verfahren zur Steuerung nach Anspruch 1, **dadurch gekennzeichnet, dass** das berechnete Drehmoment $(T_1^{calc})$ geglättet wird, wenn die Abweichung $(\sigma)$ dem absoluten Betrag nach kleiner als die gewünschte Genauigkeit $(\varepsilon)$ für die am Ende der Synchronisationsphase angestrebte Primärdrehzahl $(\omega_1)$ ist.

3. Verfahren zur Steuerung nach Anspruch 1 oder 2, **dadurch gekennzeichnet, dass** das berechnete Drehmoment $(T_1^{calc})$ durch eine Integration der Abweichung $(\sigma)$ mit einer von null verschiedenen kalibrierten Verstärkung korrigiert wird, wenn sie dem absoluten Betrag nach kleiner als die gewünschte Genauigkeit $(\varepsilon)$ ist.

4. Verfahren zur Steuerung nach Anspruch 2 oder 3, **dadurch gekennzeichnet, dass** der Drehmomentbefehl $(T_1^{ref})$ der Antriebsmaschine erhalten wird, indem das berechnete Drehmomentsignal $(T_1^{calc})$ zwischen den Werten des maximalen Drehmoments $(T_1^{max})$ und des minimalen Drehmoments $(T_1^{min})$ der Antriebsmaschine begrenzt wird.

5. Verfahren zur Steuerung nach den Ansprüchen 3 und 4, **dadurch gekennzeichnet, dass** diese Begrenzung nach der Korrektur des berechneten Signals ($T_1{}^{calc}$) durch den integrierten Term vorgenommen wird.

**acterized in that** this limitation is carried out after correction of the calculated signal $\left(T_1^{calc}\right)$ by the integrated term.

## Claims

1. Method for controlling the synchronization of a pinion (6) rotating on a primary shaft of a parallel shaft gearbox without synchronization mechanisms driven by a traction machine of the vehicle and rotatably connected to a secondary shaft of the gearbox, by sending to the traction machine, before coupling of the pinion (6) on the primary shaft, a torque command $\left(T_1^{ref}\right)$ which depends on a torque signal $\left(T_1^{calc}\right)$ calculated to minimize the difference ($\sigma$) between the primary speed ($\omega_1$) and the secondary speed ($\omega_2$) multiplied by the reduction ratio ($K$) between the two shafts of the gearbox, **characterized in that** the amplitude of the calculated torque signal $\left(T_1^{calc}\right)$ is limited on values equal to the ratio of the maximum $\left(T_1^{max}\right)$ and minimum $\left(T_1^{min}\right)$ torques of the traction machine to a calibrated limitation coefficient ($\alpha$), when the difference ($\sigma$) is greater in absolute value than the desired accuracy ($\varepsilon$) on the targeted primary speed ($\omega_1$) upon completion of the synchronization phase.

2. Control method according to Claim 1, **characterized in that** the calculated torque $\left(T_1^{calc}\right)$ is smoothed, when the difference ($\sigma$) is lower in absolute value than the desired accuracy ($\varepsilon$) on the targeted primary speed ($\omega_1$) upon completion of the synchronization phase.

3. Control method according to Claim 1 or 2, **characterized in that** the calculated torque $\left(T_1^{calc}\right)$ is corrected by an integration of the difference ($\sigma$) with a non-zero calibrated gain ($K_i$), when it is lower in absolute value than the desired accuracy ($\varepsilon$).

4. Control method according to Claim 2 or 3, **characterized in that** the torque command $\left(T_1^{ref}\right)$ of the traction machine is obtained by limiting the calculated torque signal $\left(T_1^{calc}\right)$ between the values of maximum torque $\left(T_1^{max}\right)$ and minimum torque $\left(T_1^{min}\right)$ of the traction machine.

5. Control method according to Claims 3 and 4, **char-**

Fig. 1A          Fig. 1B          Fig. 1C

$K\omega_2 \longrightarrow \underset{+}{\bigcirc} \overset{-}{\longleftarrow} \omega_1$

Si $|\sigma| \leq \varepsilon$
$K_i = K_i^{\#}$
Sinon
$K_i = 0$

$T_1^{min}$     $T_1^{max}$

$\sigma$

Si

$\sigma > \varepsilon$   $T_1^{calc} = \dfrac{T_1^{min}}{\alpha}$

ou si

$\sigma < -\varepsilon$   $T_1^{calc} = \dfrac{T_1^{max}}{\alpha}$

Sinon

$T_1^{calc} = \dfrac{(\sigma + \varepsilon)T_1^{min} - (\sigma - \varepsilon)T_1^{max}}{2\alpha\varepsilon}$

$K_i$

$\int$

$+$    $\underset{+}{\bigcirc} \overset{+}{}$

$T_1^{max}$     $T_1^{calc}$     $T_1^{min}$

Limitateur

$T_1^{ref}$

# Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2988799

- FR 2954441